(19) **Europäisches Patentamt**

**European Patent Office**

**Office européen des brevets**

(11) Veröffentlichungsnummer: **0 467 041 A2**

(12) # EUROPÄISCHE PATENTANMELDUNG

(21) Anmeldenummer: **91108112.3**

(22) Anmeldetag: **18.05.91**

(51) Int. Cl.⁵: **H02K 5/08**, H02K 15/12

(30) Priorität: **16.06.90 DE 4019314**

(43) Veröffentlichungstag der Anmeldung:
**22.01.92 Patentblatt 92/04**

(84) Benannte Vertragsstaaten:
**DE FR GB IT NL**

(71) Anmelder: **GRUNDFOS INTERNATIONAL A/S**
**7-11, Poul Due Jensensvej**
**DK-8850 Bjerringbro(DK)**

(72) Erfinder: **Due Jensen, Niels**
**Pilevej 1**
**DK-8850 Bjerringbro(DK)**
Erfinder: **Munk Jakobsen, Gerhard**
**Gammel Viborgvej 305**
**DK-9900 Randers(DK)**

(74) Vertreter: **Vollmann, Heiko, Dipl.-Ing. et al**
**Patentanwälte Wilcken & Wilcken,**
**Musterbahn 1**
**W-2400 Lübeck 1(DE)**

(54) **Verbundkörper sowie Verfahren und Vorrichtung zur Herstellung eines solchen Verbundkörpers.**

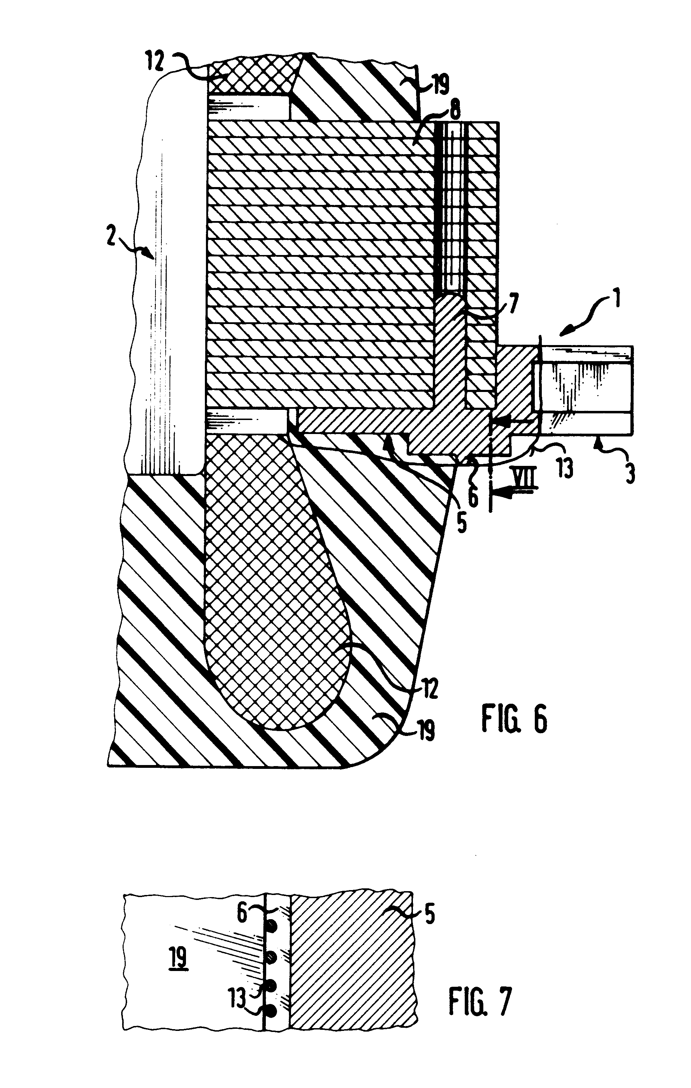

㊼ Der Verbundkörper (2,19) besteht aus wenigstens einer elektrischen Vorrichtung (2) mit zumindest einer davon nach außen abgehenden, elektrischen Leitung (13) und aus einem ausgehärteten Gießharzmaterial (19), in dem die Vorrichtung (2) wenigstens teilweise eingebettet ist. Zur wirtschaftlicheren Herstellung eines solchen Verbundkörpers ist in dem Gießharzmaterial (19) eine wenigstens als Montagebasis dienende Baueinheit (1) aus einem starren, elektrisch isolierenden Material und mit einem von außen frei zugänglichen Bereich (3) eingegossen, wobei an der Baueinheit (1) ein wenigstens entsprechend dem Durchmesser der elektrischen Leitung (13) vorstehendes Abdichtungsmittel (6) ausgebildet ist, in dem die aus dem Gießharzmaterial (19) austretende elektrische Leitung (13) unter teilweiser Deformation des Abdichtungsmittels (6) abgedichtet eingebettet ist. Ein bevorzugtes Anwendungsgebiet ist die Herstellung von Statoren solcher Elektromotoren, die beim Umwälzmotorpumpenbau verwendet werden (Figur 6).

FIG. 6

Die Erfindung betrifft einen Verbundkörper, bestehend aus wenigstens einer elektrischen Vorrichtung mit zumindest einer davon nach außen abgehenden, elektrischen Leitung, insbesondere eines elektrischen Stators, und aus einem ausgehärteten Gießharzmaterial, in dem die Vorrichtung wenigstens teilweise eingebettet ist.

Ein derartiger Verbundkörper ist z.B. ein Stator eines Elektromotors, bei dem hauptsächlich die Wicklungsköpfe in bekannter Weise in einem Gießharz eingebettet sind, wobei die freien Endabschnitte der Wicklungsdrähte des Stators aus dem erstarrten Gießharzkörper herausgeführt sind, um dann später an einer elektrischen Anschlußeinrichtung des Elektromotors angeschlossen zu werden. Ein solcher Stator ist beispielsweise in der DE-OS 37 44 685 offenbart. Dieser Stator ist umständlich und mit relativ hohen Kosten herzustellen, denn es bereitet beträchtliche Probleme, die genannten freien Endabschnitte der Statorwicklungen beim Umgießen der Wicklungsköpfe mit dem Gießharz abgedichtet aus der Gießform herauszuführen. Hierzu wird ein gesondertes Dichtungsmittel an der Stelle, an der die Endabschnitte aus der Gießform austreten sollen, extra in die Gießform eingelegt. Diese Endabschnitte werden dann später in einem gesonderten Abteil des Motorgehäuses montiert, wobei sich in diesem Abteil eine Klemmenleiste oder ein Klemmenkasten befindet. Das Montieren der Wicklungsdrahtenden hieran ist umständlich, zeitraubend und kostspielig, zumal hierbei oft Wicklungsdrahtenden vertauscht werden und/oder abreißen. Des weiteren ist es bekannt, zum elektrischen Anschluß der genannten Wicklungsendabschnitte an Anschlußeinheiten gesonderte, relativ große Halterungen an den Wicklungsköpfen zu befestigen, was ebenfalls zeitraubend ist und einen erhöhten Platzbedarf zur Folge hat. Außerdem ist auch hier die Gefahr von Verwechselungen der Wicklungsdrahtendabschnitte beim Anklemmen an einer Anschlußeinheit sehr groß, weil sich auch hier die Abgangsstellen dieser Endabschnitte von ihren Wicklungen relativ weit von der Anschlußeinheit entfernt befinden. Verwechselungen und Abrisse von Wicklungsdrahtenden führen darüber hinaus zu einer entsprechenden Ausschußquote des im Gießharz eingegossenen Stators.

Die Aufgabe der Erfindung besteht in der Verbesserung eines eingangs angeführten Verbundkörpers dahingehend, daß er zu seiner wirtschaftlicheren Fertigung an einer gemeinsamen Stelle eine stabile Anschlußbasis für elektrische Leitungsverbindungen und eine einfache Abdichtungsausbildung für den Leitungsaustritt aus dem Gießharzmaterial aufweist. Die Aufgabe besteht auch in der Schaffung eines Verfahrens und einer Gießform zur billigeren und einfacheren Herstellung eines solchen Verbundkörpers.

Die Lösung dieser Aufgabe geht von dem einleitend angeführten Verbundkörper aus und kennzeichnet sich weiter dadurch, daß in dem Gießharzmaterial eine wenigstens als Montagebasis dienende Baueinheit aus einem starren Körper aus elektrisch isolierendem Material und mit einem von außen frei zugänglichen Bereich eingegossen ist und daß an der Baueinheit ein wenigstens entsprechend dem Durchmesser der elektrischen Leitung vorstehendes Abdichtungsmittel ausgebildet ist, in dem die aus dem Gießharzmaterial austretende elektrische Leitung unter teilweiser Deformation des Abdichtungsmittels abgedichtet eingebettet ist.

Ein derartiger Verbundkörper kann billiger und einfacher gefertigt werden, da die Baueinheit, welche vorzugsweise die elektrischen Kontaktmittel aufweist, um die aus dem Gießharz austretende Leitung oder Leitungen mit extern ankommenden Leitungen verbinden zu können, als stabiler Körper in dem Gießharz eingegossen ist und gleichzeitig auch das Abdichtungsmittel aufweist, das für die abgedichtete Herausführung der elektrischen Leitung aus der Gießform an deren Trennstelle erforderlich ist. Dadurch entfällt ein gesondertes Abdichtungsmittel, dessen Herstellung und umständliche Befestigung in der Gießform mit erheblichen Kosten und Zeitaufwand verbunden ist. Des weiteren kann die Baueinheit auch als einfacher starrer Befestigungskörper in dem Gießharz eingegossen sein und so als Montagebasis dienen, an der z.B. eine steckverbindungsfähige Klemmenleiste oder ein Klemmenkasten angeschraubt werden kann, in die bzw. in den alle elektrischen Leitungen eingeführt und angeklemmt werden. Die Zusammenlegung der in Rede stehenden Baueinheit und der Austrittsstelle der oder jeder elektrischen Leitung der eingegossenen elektrischen Vorrichtung trägt ebenfalls beträchtlich zur Vereinfachung einer Gießform und eines Gießverfahrens zur Herstellung eines erfindungsgemäßen Verbundkörpers bei. Auch ist nun die Verwechselungs- und Bruchgefahr der aus dem Gießharz austretenden elektrischen Leitungen wesentlich gemindert, wenn die Leitungen an einer elektrischen Anschlußeinheit angeklemmt werden.

Ein weiterer Vorteil des erfindungsgemäßen Verbundkörpers besteht darin, daß er ohne ein ihn sonst umgebendes Gehäuse an einer Einrichtung, z.B. an einer Kreiselpumpe, deren Betrieb er bewirken soll, montiert werden kann, weil sich an der eingegossenen Baueinheit die elektrische Anschlußeinrichtung, an welcher die Wicklungsdrahtenden des Stators angeklemmt sind, befindet, sei es als integrierte oder als anmontierte Anschlußeinheit, an welcher die externe Stromversorgung angeschlossen wird. Durch die insgesamt schnellere und materialsparende Fertigung des erfindungsgemäßen Verbundkörpers in Form eines elektrischen Stators ist die wirtschaftliche Herstellung von insbesondere Umwälzmotorpumpen weiter verbessert.

Nach einer bevorzugten Ausführungsform ist das Abdichtungsmittel der Baueinheit aus einem durch Anwendung von Wärme nachgiebig werdenden Material hergestellt, wobei das Mittel die Form einer vorstehenden Rippe aufweisen kann. Die erwärmte und somit nachgiebige Abdichtungsrippe bewirkt, daß sich die freien Wicklungsdrahtenden z.B. eines elektrischen Stators mit Abstand voneinander in diese Rippe eindrücken, ohne dabei in ihrer Isolierungsbeschichtung beschädigt zu werden, und daß der übrige Teil der Rippe eine vollkommene Abdichtung zur Gießform herstellt. Hierdurch entfällt ein gesondert vorzusehendes Dichtungsmittel, und die integrierte Rippe ist darüber hinaus sehr einfach herzustellen.

Ein vereinfachtes Verfahren zur Herstellung eines erfindungsgemäßen Verbundkörpers, gemäß dem flüssiges Gießharz und die elektrische Vorrichtung in eine Gießform eingebracht werden, wonach das Gießharz erstarrt und der Verbundkörper entformt wird, kennzeichnet sich dadurch, daß eine wenigstens als Montagebasis dienende Baueinheit aus einem starren, elektrisch isolierenden Material mit einem eingießbaren Befestigungsabschnitt hergestellt wird, wobei dieser Abschnitt mit einem wenigstens entsprechend dem Durchmesesr der abgehenden Leitung vorstehenden, zumindest nachgiebig werdenden Abdichtungsmittel versehen wird, daß die Baueinheit unter Freilassung des einzugießenden Bereiches ihres Befestigungsabschnittes an der Vorrichtung und/oder an der Gießform fixiert wird, wobei die elektrische Leitung der Vorrichtung an dem Abdichtungsmittel des Befestigungsabschnittes plaziert wird, und daß die elektrische Leitung der Vorrichtung beim Schließen der Gießform durch ein Gießformteil in das nachgiebige Abdichtungsmittel eingedrückt und dieses Gießformteil gegen den übrigen Teil des nachgiebigen Abdichtungsmittels dichtend zur Anlage gebracht wird.

Eine vereinfachte Gießform eines erfindungsgemäßen Verbundkörpers besteht darin, daß eines der Formteile der Gießform eine Ausnehmung zur wenigstens teilweisen Aufnahme der Baueinheit mit vorstehendem Dichtungsmittel aufweist und daß die Ausnehmung eine Tiefe aufweist, die gleich der abdichtungsmittelfreien Dicke der Baueinheit in ihrem Einlegebereich plus wenigstens dem Durchmesser der von der im Innern der Gießform befindlichen und in Gießharz einzugießenden elektrischen Vorrichtung abgehenden elektrischen Leitung ist.

Die Erfindung ist nachstehend anhand der in den anliegenden Zeichnungen dargestellten Ausführungsformen beispielsweise näher erläutert. Es zeigen:

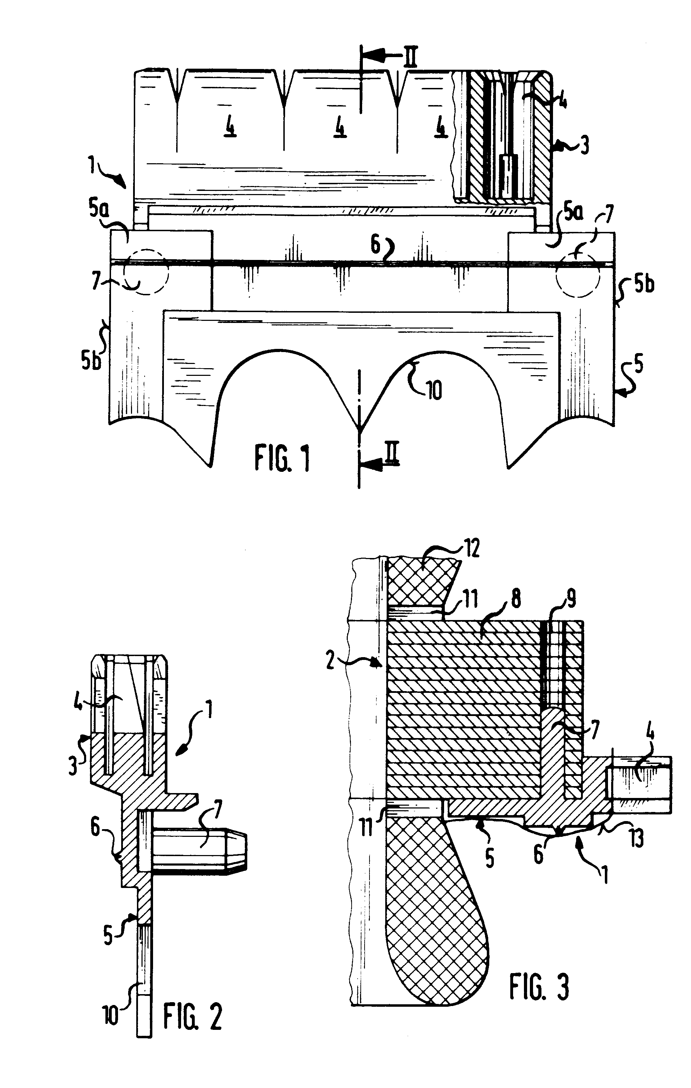

Figur 1
eine Vorderansicht auf eine eingießbare Baueinheit,
Figur 2
eine Schnittdarstellung nach der Linie II-II in Figur 1,
Figuren 3 + 4
die genannte Baueinheit im vormontierten Zustand,
Figur 5
im Axialschnitt eine Gießform mit einem darin eingelegten elektrischen Stator, der mit der Baueinheit vorbereitet ist,
Figur 6
in axialer und und teilweiser Schnittdarstellung den nach dem Gießvorgang erhaltenen Verbundkörper,
Figur 7
eine teilweise Schnittdarstellung nach der Linie VII in Figur 6 in stark vergrößertem Maßstab.

Um einen Verbundkörper aus einem Gießharzkörper und einer elektrischen Vorrichtung, z.B. ein elektrischer Stator, zu erhalten, der eine eingegossene, elektrische Anschlußeinheit, z.B. eine vorzugsweise steckverbindungsfähige Klemmenleiste, aufweist, wird so vorgegangen, daß gemäß den Figuren 1 und 2 eine gesonderte Klemmenbaueinheit 1 unabhängig von dem elektrischen Stator 2 (Figur 3) hergestellt wird. Die Klemmenbaueinheit 1 umfaßt einen Kontaktierungsabschnitt 3 mit den üblichen Klemmenkammern 4 und einen Befestigungsabschnitt 5. Da die Klemmenkammern 4 und deren Kontaktmittel-Ausrüstung an sich bekannt sind, sind diese Teile nicht weiter beschrieben.

Der Befestigungsabschnitt 5 weist auf einer Seite ein längliches, mehr oder weniger breites, einstückig mit dem Abschnitt 5 verbundenes Abdichtungsmittel 6 auf, daß sich, wie hier gezeigt, parallel zu den in Reihe angeordneten Klemmenkammern 4 des Abschnittes 3 erstreckt und im gezeigten Beispiel in Form einer vorstehenden Rippe ausgebildet ist, wie es in starker Vergrößerung aus Figur 2 deutlich erkennbar ist. Die Rippe 6 braucht sich nicht über die gesamte Länge des Abschnittes 5 zu erstrecken.

Die hier gezeigte Klemmenbaueinheit 1 besteht vorzugsweise aus einem starren, wenigstens bei Anwendung von Wärme nachgiebig werdenden, elektrisch isolierenden Material, wobei sich die Eigenschaft des Nachgiebigwerdens im wesentlichen auf das Abdichtungsmittel 6 bezieht, wie noch klar wird. Ein solches Material ist vorzugsweise ein thermoplastisches Polymer, z.B. ein Polyäthylenterephthalat (PETP). Die Abdichtungsrippe 6 hat eine Höhe, die wenigstens dem Durchmesser der freien, anzuklemmenden Drahtenden der Wicklungen bzw. dem Durchmesser der oder jeder abgehenden Leitung einer elektrischen Vorrichtung entspricht, so daß die Drahtenden bzw. die Leitungen in die Rippe eingedrückt werden können, wie noch klar wird.

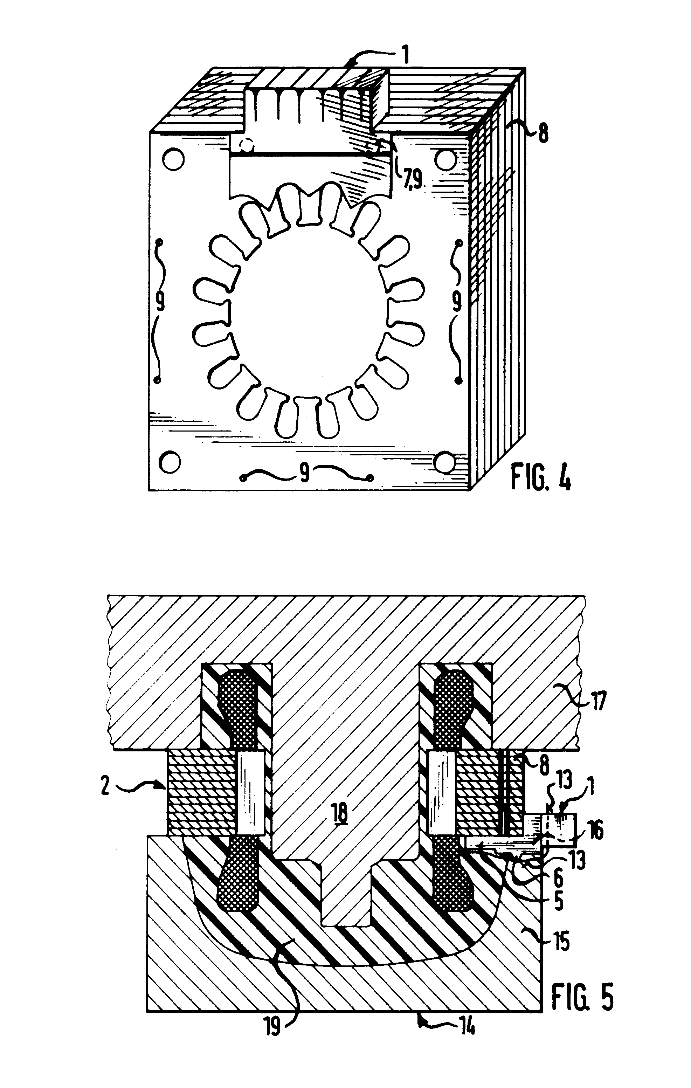

Auf der dem Abdichtungsmittel 6 gegenüberliegenden Seite des Befestigungsabschnittes 5 ist die gezeigte Baueinheit 1 mit zwei Fixierungszapfen 7 versehen, um die Einheit 1 am Blechpaket des Stators 2 vormontieren zu können. Hierzu wird das Blechpaket 8 mit entsprechenden Fixierungslöchern 9 versehen, in welche die Baueinheit 1 mit den Zapfen 7 eingesteckt wird, wie es in den Figuren 3 und 4 gezeigt ist.

Des weiteren ist in der den Klemmenkammern 4 abgewandte Randbereich 10 des Befestigungsabschnittes 5 sägezahnartig ausgebildet, wie Figur 1 zeigt. Darüber hinaus ist der Abschnitt 5 in der Höhe so gewählt, daß der Randbereich 10 bis zu der Nutisolation 11 der Statorwicklungen 12 heranreicht oder fast heranreicht, wie es die Figuren 3 und 4 zeigen. Hierdurch besitzt der Befestigungsabschnitt 5 einen großen Bereich, der später in einem Gießharz eingegossen ist und dadurch einen sehr großen Halt für die Klemmenbaueinheit 1 ergibt.

Die beiden schmalen Endbereiche 5a des Befestigungsabschnittes 5 sind insbesondere im Bereich des Abdichtungsmittels 6 abgeschrägt ausgebildet, das heißt sie laufen zu den beiden Rändern 5b scharf aus, um eine einfache seitliche Abdichtung des Abschnittes 5 in einer Gießform zu erhalten.

Um den für einen Elektromotor bestimmten elektrischen Stator 2, das heißt das mit den Wicklungen 12 versehene Blechpaket 8, zum Eingießen mit Gießharzmaterial weiter vorzubereiten, wird die Klemmenbaueinheit 1 mittels der Zapfen 7 am Blechpaket 8 fixiert (Figur 3). Dann werden die freien Wicklungsdrahtenden 13 der Wicklungen 12 in die Kammern 4 eingezogen, wo sie in an sich bekannter Weise mit den nicht dargestellten Kontakten elektrisch verbunden werden. Hierzu verlaufen die Wicklungen 13 mit Abstand voneinander quer über den Befestigungsabschnitt 5 und über die Abdichtungsrippe 6 und liegen zunächst daran mehr oder weniger an.

Vorzugsweise wird dann die am Stator 2 befindliche Baueinheit erwärmt, wobei insbesondere darauf geachtet wird, daß das Abdichtungsmittel 6 bzw. die Abdichtungsrippe 6 des Befestigungsabschnittes 5 der Baueinheit 1 einen vorbestimmten Weichheitszustand erreicht. Dieser Weichheitszustand muß so sein, daß sich die Wicklungsdrahtenden 13 in die Rippe 6 eindrücken können, ohne dabei in ihrer Isolierungsbeschichtung beschädigt zu werden.Bei der Wärmeanwendung wird vorteilhafterweise diejenige Wärme ausgenutzt, die beim Heißformen der Wicklungsköpfe 12 anfällt.

Nunmehr wird der so vorbereitete Stator 2 in eine mehrteilige, erwärmte Gießform 14 (Figur 5) eingebracht. Hierzu hat das Unterteil 15 der Gießform 14 eine dem Einlegebereich des Befestigungsabschnittes 5 der Baueinheit 1 derart angepaßte Ausnehmung 16, daß das Abdichtungsmittel 6 ohne wesentliche Deformation dichtend gegen das Unterteil 15 beim Schließen der Gießform zur Anlage kommt, während der übrige, das heißt innere Teil des Befestigungsabschnittes 5 in den freien Hohlraum der Gießform 14 hineinragt, wie es insgesamt aus Figur 5 klar zu erkennen ist. Dann wird das Oberteil 17 der Gießform 14 zwecks Schließung der Gießform auf die andere Seite des Blechpaketes 8 des Stators aufgesetzt, und beide Gießformteile 15 und 17 werden in Richtung zueinander gepreßt, um die Gießform nach außen zu schließen und abzudichten. Da die Abdichtungsrippe 6 erwärmt worden ist, werden die Wicklungsdrahtenden 13 beim Zusammenpressen der Gießform in die weich gewordene Abdichtungsrippe 6 eingedrückt, ohne dabei beschädigt zu werden. Des weiteren bildet nun die Rippe 6 eine sichere Abdichtung der Gießform an dieser Austrittsstelle der Wicklungsdrahtenden nach außen. Somit ist neben der Abdichtungsfunktion ein sicheres Herausführen der Wicklungsdrahtenden 13 aus der Gießform 14 gewährleistet.

Um das Innere des elektrischen Stators 2 von einzugießendem Gießharz freizuhalten, ist es möglich, daß ein gesondertes Kernteil 18 in an sich bekannter Weise in den Stator 2 eingelegt wird oder daß das Gießformoberteil 17 mit einem derartigen Kernteil ein einstückiges Formteil bildet. Diese Ausbildung der Gießform ist jedoch nicht Gegenstand der vorliegenden Erfindung.

Die so gießfertig vorbereitete Gießform 14 wird dann mit dem erhitzten Gießharz 19 gefüllt, welcher Verfahrensschritt in üblicher Technik ausgeführt werden kann und daher hier nicht weiter beschrieben ist.

Nachdem das eingegossene Gießharz, für dessen Material bekannte Zusammensetzungen gewählt werden, erstarrt und abgekühlt ist, wird der so hergestellte Verbundkörper aus der Gießform 14 entformt. Es ist aus den Figuren 6 und 7 erkennbar, daß die Wicklungsdrahtenden 13 übersichtlich, unbeschädigt und sicher in der Abdichtungsrippe 6 praktisch in Anlage an dem Abschnitt 5 fixiert sind. Der elektrische Stator 2 ist durch das vorgeschlagene und vorstehend erläuterte Verfahren bereits mit einer integrierten Klemmenbaueinheit 1 versehen, in welcher die Wicklungsdrahtenden 13 bereits eingezogen und elektrisch angeklemmt sind. Für den so hergestellten Stator 2, das heißt mit eingegossener und mit den Wicklungsdrahtenden des Stators elektrisch verbundener Klemmenbaueinheit, ist zu seiner Stromversorgung z.B. nur noch ein Stecker erforderlich, der in die Baueinheit 1 eingesteckt wird. Alternativ kann anstelle des steckfähigen Kontaktierungsabschnittes 3 der Baueinheit 1 auch ein üblicher Klemmenkasten gewählt werden. Auch ist es möglich, den Abschnitt 3 als getrennte Einheit auszubilden und diese dann später an dem Befestigungsabschnitt 5 zu befestigen; in diesem Fall ist der die Abdichtungsrippe 6 aufweisende Abschnitt 5 allein in dem Gießharz eingebettet und dient dann als Montagebasis für einen Klemmenkasten, eine Steckverbindungseinrichtung oder dergleichen. Als eingießbare elektrische Vorrichtung ist vorstehend ein Stator eines Elektromotors beschrieben; es kann jedoch statt dessen z.B. auch eine elektrische Regelungs- und/oder Steuerungseinrichtung oder ein Frequenzumrichter verwendet bzw. eingegossen werden. Auch ist es beim Herstellen des vorstehend beschriebenen Verbundkörpers möglich, die einzugießende Baueinheit statt am Stator auch an der Gießform oder an beiden Teilen zu fixieren, um eine sichere Lage vor dem Eingießen von Gießharzmaterial zu erhalten.

**Patentansprüche**

1. Verbundkörper, bestehend aus wenigstens einer elektrischen Vorrichtung (2) mit zumindest einer davon nach außen abgehenden, elektrischen Leitung 13, insbesondere eines elektrischen Stators 2, und aus einem ausgehärteten Gießharzmaterial (19), in dem die Vorrichtung wenigstens teilweise eingebettet ist, dadurch gekennzeichnet, daß in dem Gießharzmaterial eine wenigstens als Montagebasis dienende Baueinheit (1) aus einem starren, elektrisch isolierenden Material und mit einem von außen frei zugänglichen Bereich eingegossen ist und daß an der Baueinheit (1) ein wenigstens entsprechend dem Durchmesser der elektrischen Leitung (13) vorstehendes Abdichtungsmittel (16) ausgebildet ist, in dem die aus dem Gießharzmaterial (19) austretende elektrische Leitung (13) unter teilweiser Deformation des Abdichtungsmittels (6) abgedichtet eingebettet ist.

2. Verbundkörper nach Anspruch 1, dadurch gekennzeichnet, daß die starre Baueinheit (1) eine elektrische, z.B. steckverbindungsfähige Anschlußeinheit umfaßt und einen im Gießharzmaterial (19) eingegossenen, das vorzugsweise als Rippe ausgebildete Abdichtungsmittel (6) aufweisenden Befestigungsabschnitt(5)sowie einen aus dem Gießharzmaterial (19) herausragenden Kontaktierungsabschnitt (3) für die Aufnahme der aus dem Gießharzkörper austretenden elektrischen Leitung (13) und weiterer elektrischer Kontaktmittel aufweist.

3. Verfahren zur Herstellung eines Verbundkörpers aus einem Gießharz und wenigstens einer darin eingebetteten, elektrischen Vorrichtung mit zumindest einer davon abgehenden, nach außen geführten, elektrischen Leitung, insbesondere eines elektrischen Stators, gemäß dem flüssiges Gießharz und die elektrische Vorrichtung in eine Gießform eingebracht werden, wonach nach das Gießharz erstarrt und der Verbundkörper entformt wird, dadurch gekennzeichnet, daß eine wenigstens als Montagebasis dienende Baueinheit aus einem starren, elektrisch isolierenden Material mit einem eingießbaren Befestigungsabschnitt hergestellt wird, wobei dieser Abschnitt mit einem wenigstens entsprechend dem Durchmesser der abgehenden Leitung vorstehenden, zumindest nachgiebig werdenden Abdichtungsmittel versehen wird, daß die Baueinheit unter Freilassung des einzugießenden Bereiches ihres Befestigungsabschnittes an der Vorrichtung und/oder an der Gießform fixiert wird, wobei die elektrische Leitung der Vorrichtung an dem Abdichtungsmittel des Befestigungsabschnittes plaziert wird, und daß die elektrische Leitung der Vorrichtung beim Schließen der Gießform durch ein Gießformteil in das nachgiebige Abdichtungsmittel eingedrückt und dieses Gießformteil gegen den übrigen Teil des nachgiebigen Abdichtungsmittels dichtend zur Anlage gebracht wird.

4. Verfahren nach Anspruch 3, dadurch gekennzeichnet, daß das Abdichtungsmittel im Befestigungsabschnitt der Baueinheit aus einem durch Anwendung von Wärme nachgiebig werdenden Material hergestellt wird.

5. Verfahren nach Anspruch 4, dadurch gekennzeichnet, daß das Abdichtungsmittel in Form einer vorstehenden Rippe oder dergleichen hergestellt wird, deren Höhe mindestens dem Durchmesser der elektrischen Leitung der Vorrichtung entspricht.

6. Verfahren nach Anspruch 3, 4 oder 5, dadurch gekennzeichnet, daß die Baueinheit aus einem thermoplastischen Polymer, z.B. aus Polyäthylenterephthalat (PETP), hergestellt wird.

7. Verfahren nach Anspruch 4, 5 oder 6, dadurch gekennzeichnet, daß wenigstens die Baueinheit beheizt wird, vorzugsweise vor dem Einsetzen der gießfertig vorbereiteten elektrischen Vorrichtung in die Gießform.

8. Verfahren nach einem der Ansprüche 3 bis 7, dadurch gekennzeichnet, daß die Baueinheit mit Fixierungszapfen und die Vorrichtung mit Fixierungslöchern versehen wird und daß die Fixierungszapfen in die Fixierungslöcher eingesetzt werden.

9. Verfahren nach einem der Ansprüche 3 bis 8 zur Anwendung bei einem Stator eines Elektromotors, dadurch gekennzeichnet, daß der Befestigungsabschnitt der Baueinheit an seinem den Wicklungsköpfen des Stators zugekehrten Randbereich sägezahnartig ausgebildet wird und daß der in das Gießharzeinzubettende Befestigungsabschnitt so groß hergestellt wird, daß der sägezahnartige Randbereich bis oder fast bis zu der Nutisolation der Wicklungsköpfe heranreicht.

10. Gießform zur Herstellung eines Verbundkörpers aus einem Gießharzkörper und einer darin wenigstens teilweise eingebetteten, elektrischen Vorrichtung mit zumindest einer davon abgehenden, nach außen geführten, elektrischen Leitung, bestehend aus einer mehrteiligen Gießform (14) zur Aufnahme der in Gießharz einzubettenden Vorrichtung, dadurch gekennzeichnet, daß eines der Formteile (15,17) der Gießform (14) eine Ausnehmung (16) zur wenigstens teilweisen Aufnahme einer einzugießenden Baueinheit (1) mit vorstehendem Abdichtungsmittel (6) aufweist und daß die Ausnehmung (16) eine Tiefe hat, die gleich der abdichtungsmittelfreien Dicke der Baueinheit (1) in ihrem Einlegebereich plus wenigstens dem Durchmesser der von der Vorrichtung (2) abgehenden elektrischen Leitung (13) ist.

FIG. 1

FIG. 2

FIG. 3

FIG. 4

FIG. 5

EP 0 467 041 A2

FIG. 6

FIG. 7

9